# EUROPÄISCHE PATENTSCHRIFT

(11) **EP 2 665 643 B1**
(45) Veröffentlichungstag und Bekanntmachung des Hinweises auf die Patenterteilung: **16.08.2017**
(21) Anmeldenummer: 12714930.0
(22) Anmeldetag: 13.01.2012
(51) Int. Cl.: B64C 1/40, F16F 7/104

(54) **VORRICHTUNG ZUR SCHWINGUNGSDÄMPFUNG IN EINER STRUKTUR**
DEVICE FOR DAMPING VIBRATION IN A STRUCTURE
PROCÉDÉ D'AMORTISSEMENT DES VIBRATIONS DANS UNE STRUCTURE

(30) Priorität: 21.01.2011 DE 102011009191
(43) Veröffentlichungstag der Anmeldung: 27.11.2013
(73) Patentinhaber: Airbus Defence and Space GmbH, 85521 Ottobrunn (DE)
(72) Erfinder: GÜNDEL, Andreas, 01099 Dresden (DE); HÄUSLER, Sigurd, 88690 Uhldingen-Mühlhofen (DE)
(74) Vertreter: Isarpatent
(86) Internationale Anmeldenummer: PCT/DE2012/000026
(87) Internationale Veröffentlichungsnummer: WO 2012/097795

(56) Entgegenhaltungen:
- WO-A1-97/12160
- WO-A1-98/16916
- WO-A1-99/22361
- WO-A1-2008/127696
- US-A- 3 490 556

## Beschreibung

Die Erfindung betrifft eine Vorrichtung zur Dämpfung der Schwingung einer Frequenz ω₀ in der Spantstruktur eines Propellerflugzeugs, mit einer Anzahl an den Spanten befestigter passiver Schwingungstilger, die jeweils mindestens ein über ein federelastisches Glied und ein Dämpfungsglied gehaltenes schwingungsfähiges Massenglied mit einer Resonanzfrequenz ω₀ umfassen.

In Vorrichtungen mit bewegten Massen, insbesondere Luft-, Land- oder Wasserfahrzeugen oder beispielsweise Kraftwerken, kommt es durch die bewegten Massen zwangsläufig zu Schwingungen, die je nach den Umständen mehr oder weniger stark sind und nachteilige Auswirkungen haben. Bei Fahrzeugen geht es meist um den Komfort für die an Bord befindlichen Personen, es kann aber auch darum gehen, die Schwingungen zur Vermeidung von schwingungsinduzierten Werkstoffbeeinträchtigungen (Dauerbruch) zu reduzieren.

Vor allem wenn die zu dämpfenden Schwingungen stets eine mehr oder weniger konstante Schwingungsfrequenz und Schwingungsrichtung aufweisen, kann die Dämpfung sehr wirksam durch die Anbringung von passiven Schwingungstilgern erfolgen. Ansonsten kommen aktive Schwingungstilger zum Einsatz, die jedoch baulich aufwändiger sind, eine externe Energieversorgung und regelmäßige Wartung benötigen.

Passive Schwingungstilger sind üblicherweise als Einmassenschwinger ausgebildet, die aus einer über ein Federelement an der nichtrotierenden, schwingenden Struktur befestigten in einer Richtung oszillierbaren Masse bestehen. Durch die Größe der Masse, der Federhärte und die Federdämpfung ergibt sich für einen Einmassenschwinger eine Resonanzfrequenz, die auf die Frequenz der zu dämpfenden Schwingung abgestimmt ist. So sind bei Luftfahrzeugen duzende bis hunderte solcher Schwingungstilger an den einzelnen Spanten angebracht, um die Schwingungen in den Spanten zu reduzieren und damit die damit verbundene Geräuschentwicklung. Die Schwingungstilger sind dabei stets paarweise symmetrisch zum Spant angebracht, um möglichst momentenfrei eine Schwingungsdämpfung im Inneren des Spants zu erzielen.

Problematisch ist diese Art der Schwingungsdämpfung jedoch, wenn die zu dämpfende Schwingung keine konstante Frequenz aufweist sondern innerhalb eines gewissen Bereichs, beispielsweise bis zu 10%, schwankt, wie dies bei Propellerflugzeugen der Fall ist, je nach geflogener Geschwindigkeit. In diesem Fall weicht die Resonanzfrequenz der Schwingungstilger von der tatsächlich auftretenden Frequenz ab, was die Wirksamkeit der Dämpfung beträchtlich verringern kann, denn bei einem Einmassenschwinger unterliegt die sog. Überhöhungsfunktion, die abhängig ist von der Masse, der Dämpfung, der Steifigkeit sowie der Frequenz einer starken Frequenzabhängigkeit. Um trotzdem eine wirksame Schwingungsdämpfung zu erreichen, sind auf verschiedene Frequenzen abgestimmte Schwingungstilger nötig, was den baulichen Aufwand erhöht.

Eine Vorrichtung zur Schwingungdämpfung gemäß dem Oberbegriff von Anspruch 1 ist aus der WO 98/16916 A1 bekannt, wobei es sich um symmetrrsiche Schwingungstilger handelt. Diese Dämpfungsvorrichtung weist ein rotierbares Element auf, das sich durch Drehung so ausrichtet, dass zwei verschiedene Frequenzen gedämpft werden können.

Die WO 99/22361 A1 offenbart einen an einem Flugzeug befestigten aktiven Schwingungstilger mit einem unsymmetrisch angebrachten Gebelart, der mittels einer Steuerung in seinter Länge veränderbar ist.

Die WO 97/12160 A1 offenbart einen symmetrsischen Schingungstilger mit einem bestimmten Resonanzverhältnis.

Hiervon ausgehend liegt der Erfindung die Aufgabe zugrunde, eine gattungsgemäße Vorrichtung zur Schwingungsdämpfung in einer Struktur bereitzustellen, die eine verbesserte Schwingungsdämpfung über einen größeren Frenquenzbereich ermöglicht.

Die Erfindung ergibt sich aus den Merkmalen der unabhängigen Ansprüche. Vorteilhafte Weiterbildungen und Ausgestaltungen sind Gegenstand der abhängigen Ansprüche.

Die Erfindung bewirkt vorteilhafterweise, dass gegenüber symmetrischen Schwingungstilgern bei der Auslegungsfrequenz ω₀ etwa die gleiche Schwingungsdämpfung erzielbar ist, während bei einer 10-30%igen Abweichung von ω₀ eine wesentlich bessere Dämpfung erzielt wird. Dadurch wird Gewicht und Platz gespart und der Installationsaufwand reduziert. Die Erfindung beruht auf der Erkenntnis, dass durch die unsymmetrische Installation Biegemomente in die Struktur eingeleitet werden, wobei zur Kompensation der Biegemomente die Schwingungstilger gezielt verstimmt werden, wodurch der Arbeitsbereich der Einmassenschwinger ein nahezu frequenzunabhängiges Verhalten zeigt.

Insbesondere die Anwendung der Erfindung in einem Propellerflugzeug erhöht die Flexibilität durch die Anwendbarkeit mehrerer Propellerdrehzahlen.

Gemäß einer vorteilhaften Weiterbildung der Erfindung liegt das Resonanzverhältnis ω/ω₀ zwischen der Resonanzfrequenz der Schwingungstilger ω und der zu dämpfenden Frequenz ω₀ zwischen 1,1 und 1,3 oder dem Kehrwert davon.

Gemäß einer vorteilhaften Weiterbildung der Erfindung ist der Hebelarm zwischen 20 und 100 mm lang, besonders bevorzugt zwischen 20 und 50 mm.

Weitere Vorteile, Merkmale und Einzelheiten ergeben sich aus der nachfolgenden Beschreibung, in der unter Bezug auf die Zeichnung drei Ausführungsbeispiele näher dargelegt sind. Beschriebene und/oder bildlich dargestellte Merkmale bilden für sich oder in beliebiger, sinnvoller Kombination den Gegenstand der Erfindung, gegebenenfalls auch unabhängig von den Ansprüchen. Gleiche, ähnliche und/oder funktionsgleiche Teile sind mit gleichen Bezugszeichen versehen.

Es zeigen:
- Figur 1:: eine schematische Darstellung einer herkömmlichen symmetrischen Schwingungstilgeranordnung;
- Figur 2:: eine schematische Darstellung einer erfindungsgemäßen unsymmetrischen Schwingungstilgeranordnung;
- Figuren 3a und 3b:: eine Gegenüberstellung der Funktionen der komplexen dynamischen Masse des herkömmlichen symmetrischen Schwingungstilgerpaares gegenüber der des erfindungsgemäßen unsymmetrischen Schwingungstilgerpaares.

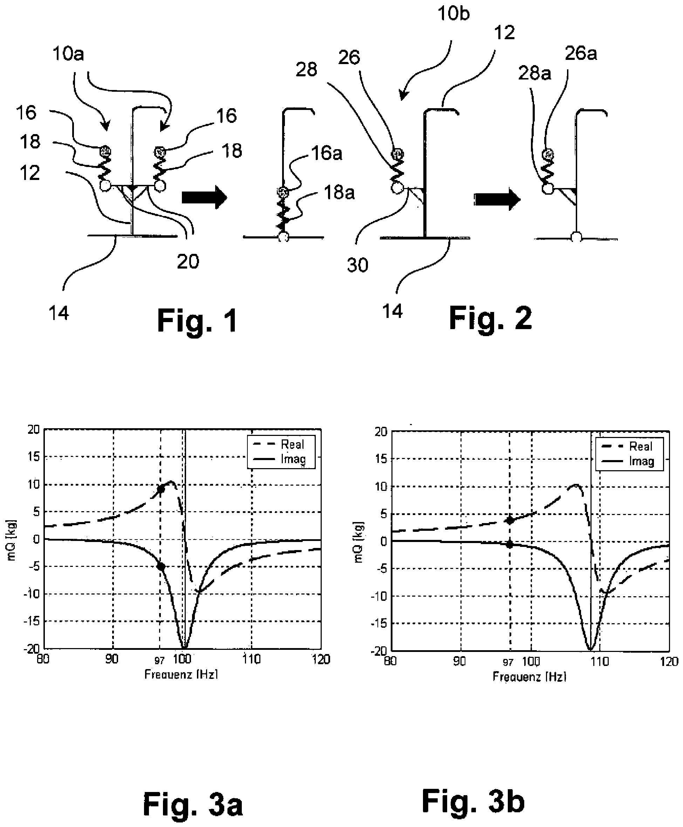

In Figur 1 ist links ein herkömmliches symmetrisch montiertes Schwingungstilgerpaar 10a dargestellt, das beiderseits an einem Spant 12 angebracht ist. Der Spant 12 ist innenseitig an der Außenhaut 14 eines nicht dargestellten Luftfahrzeugs angebracht. Das Schwingungstilgerpaar 10a umfasst zwei Massen 16, die jeweils über eine gedämpfte Feder 18 an zwei Hebelarmen 20 angebracht sind, wobei die Schwingungsrichtung der beiden Massen 16 in der Richtung ausgerichtet ist, in der die Hauptamplitude der Schwingung auftritt. Dies ist bei Schwingungen durch die Propellervibrationen in einem Propellerflugzeug im Wesentlichen lotrecht zur Außenhaut. Beide Massen 16, Federn 18 und Hebelarme 20 sind dabei vollkommen gleichartig, um eine Symmetrie zu erzeugen.

Die rechte Darstellung in Figur 1 ist eine Idealisierung des realisierten Tilgers und zeigt, dass damit ein virtueller Schwingungstilger erzeugt wird, der im Inneren des Spants 12 liegt. Die virtuelle Masse 16a entspricht dabei der doppelten Masse eines der beiden Schwingungstilger. Analog ist die Steifigkeit der virtuellen Feder 18a doppelt so groß wie die Steifigkeit einer der beiden identischen Federn 18.

Demgegenüber zeigen die beiden Darstellungen in Figur 2 den erfindungsgemäßen unsymmetrischen Schwingungstilger 10b. Dieser umfasst eine Masse 26 sowie eine Feder 28, die über einen Hebelarm 30 am Spant 12 einseitig angebracht ist. Rechts in Figur 2 ist das Ersatzschaltbild dargestellt, das keine Änderung zeigt. Die Masse 26 bzw. virtuelle Masse 26a entspricht dabei der virtuellen Masse 16a bzw. ist doppelt so groß wie die Massen 16 des herkömmlichen, symmetrischen Schwingungstilgerpaares 10a. Gleiches gilt für die Steifigkeit der Feder 28 bzw. virtuelle Steifigkeit 28a, die derjenigen der virtuellen Feder 18a entspricht.

Figuren 3a und 3b zeigen eine Gegenüberstellung der Funktionen der komplexen dynamischen Masse einerseits des herkömmlichen symmetrischen Schwingungstilgerpaares 10a gemäß Figur 1 (Figur 3a) gegenüber der des erfindungsgemäßen unsymmetrischen Schwingungstilgerpaares 10b (Figur 3b). Beide Anordnungen weisen eine Masse m = 0,8 kg und eine Dämpfung d = 0,04 auf, die Anordnungen haben beide jeweils einen Tilgerkennwert mq = m/d = 20 kg. Die Schwingungsachsen der Schwingungstilger sind ferner mit einem Hebelarm 20,30 von 35 mm von der Spantmittelachse angeordnet. Und zwar sind beide Anordnungen abgestimmt auf eine zu dämpfende Schwingung von f = 97 Hz, die typischerweise bei Propellerflugzeugen auftritt, und die bei den Kurven durch Punkte gekennzeichnet ist. Die jeweils oberen Kurven zeigen den Realteil, die unteren Kurven den Imaginärteil.

Dabei ist zu erkennen, dass die Abstimmungsfrequenz bei der symmetrischen Anordnung (bei der der Realteil der Funktion null ist) bei 100,4 Hz liegt. Dabei zeigt Figur 3a, dass bei Abweichungen von der Anregungsfrequenz 97 Hz die Steigungen der Real- und Imaginäranteile sehr steil sind, sich also das Dämpfungsverhalten stark verändert. Mit anderen Worten, das symmetrische Schwingungstilgerpaar 10a zeigt nur in unmittelbarer Nähe zur Anregungsfrequenz von 97% optimales Dämpfungsverhalten. Die maximale Schalldruckreduktion liegt bei ca. 25 dB.

Demgegenüber zeigen bei dem in Figur 3b dargestellten erfindungsgemäßen unsymmetrischen Schwingungstilger 10b (Figur 2) die Real- und Imaginäranteilkurven wesentlich geringere Steigungen. Die Abstimmungsfrequenz liegt bei 110,2 Hz. Das bedeutet, dass bei einer Variation der Frequenz der zu dämpfenden Schwingung das Dämpfungsverhalten wesentlich konstanter bleibt als bei der herkömmlichen Anordnung. Die erfindungsgemäße Anordnung ist also deutlich frequenzstabiler als die herkömmliche Anordnung. Die maximale Schalldruckreduktion liegt bei ca. 25 dB.

Je länger der Hebelarm gewählt wird, um so höher wird die Abstimmungsfrequenz und desto frequenzstabiler wird die Dämpfung.

## Patentansprüche

1. Vorrichtung zur Dämpfung der Schwingung einer Frequenz ω₀ in der Spantstruktur eines Propellerflugzeugs, mit einer Anzahl an den Spanten befestigter passiver Schwingungstilger, die jeweils mindestens ein über ein federelastisches Glied und ein Dämpfungsglied gehaltenes schwingungsfähiges Massenglied mit einer Resonanzfrequenz ω umfassen, **dadurch gekennzeichnet, dass** die Schwingungstilger jeweils über einen Hebelarm einseitig unsymmetrisch an den Spanten angebracht sind, wobei das Resonanzverhältnis ω/ω₀ zwischen der Resonanzfrequenz der Schwingungstilger ω und der zu dämpfenden Frequenz ω₀ zwischen 1,1 und 1,3 oder dem reziproken Verhältnis beträgt.

2. Vorrichtung zur Schwingungsdämpfung nach Anspruch 1, **dadurch gekennzeichnet, dass** der Hebelarm zwischen 20 und 100 mm lang ist.

3. Vorrichtung zur Schwingungsdämpfung nach Anspruch 2, **dadurch gekennzeichnet, dass** der Hebelarm zwischen 20 und 50 mm lang ist.

## Claims

1. Device for damping the vibration of a frequency ω₀ in the frame structure of a propeller aircraft, said device having a number of passive vibration absorbers that are fastened to the frames, said vibration absorbers comprising in each case at least one mass element that can vibrate and is held by way of a resilient elastic member and an attenuator, said mass element having a resonance frequency ω, **characterised in that** the vibration absorbers in each case are attached by way of a lever arm on one side in an asymmetrical manner to the frames, wherein the resonance ratio ω/ω₀ between the resonance frequency ω of the vibration absorber and the frequency ω₀ that is to be damped is between 1,1 and 1,3 or the reciprocol ratio.

2. Device for damping vibration according to claim 1, **characterised in that** the lever arm is between 20 and 100 mm long.

3. Device for damping vibration according to claim 2, **characterised in that** the lever arm is between 20 and 50 mm long.

## Revendications

1. Dispositif pour amortir les vibrations d'une fréquence ω₀ dans la structure de couple d'un avion à hélice, comportant une quantité d'amortisseurs de vibrations passifs fixés aux couples, chacun comprenant au moins un organe de masse qui peut vibrer à une fréquence de résonnance ω et est maintenu par un organe élastique à ressort et un organe d'amortissement, **caractérisé en ce que** les amortisseurs de vibrations sont chacun appliqués aux couples sur un côté de manière asymétrique par le biais d'un bras de levier, le rapport de résonnance ω/ω₀ entre la fréquence de résonnance ω des amortisseurs de vibrations et la fréquence à amortir ω₀ étant compris entre 1,1 et 1,3 ou le rapport réciproque.

2. Dispositif d'amortissement des vibrations selon la revendication 1, **caractérisé en ce que** le bras de levier a une longueur comprise entre 20 et 100 mm.

3. Dispositif d'amortissement des vibrations selon la revendication 2, **caractérisé en ce que** le bras de levier a une longueur comprise entre 20 et 50 mm.
